# EUROPEAN PATENT APPLICATION

(11) **EP 2 053 675 A1**
(43) Date of publication of application: **29.04.2009**
(21) Application number: 07740800.3
(22) Date of filing: 27.03.2007
(51) Int. Cl.: H01M 4/92

(54) **ELECTRODE CATALYST FOR FUEL CELL AND METHOD FOR PRODUCING THE SAME**

(30) Priority: 31.03.2006 JP 2006100231
(71) Applicant: Toyota Jidosha Kabushiki Kaisha, Toyota-shi, Aichi 471-8571 (JP); Cataler Corporation, Shizuoka-ken 437-1492 (JP)
(72) Inventor: TAKAHASHI, Hiroaki, Toyota-shi, Aichi 471-8571 (JP); OHASHI, Sozaburo, Toyota-shi, Aichi 471-8571 (JP); KAWAMURA, Tetsuo, Toyota-shi, Aichi 471-8571 (JP); HORIUCHI, Yousuke, Kakegawa-shi, Shizuoka 437-1492 (JP); NAGATA, Takahiro, Kakegawa-shi, Shizuoka 437-1492 (JP); TERADA, Tomoaki, Kakegawa-shi, Shizuoka 437-1492 (JP); TABATA, Toshiharu, Kakegawa-shi, Shizuoka 437-1492 (JP); ENOMOTO, Susumu, Kakegawa-shi, Shizuoka 437-1492 (JP)
(74) Representative: Kuhnen & Wacker
(86) International application number: PCT/JP2007/057364
(87) International publication number: WO 2007/119640

(57) **Abstract**

To enhance the activation of a catalyst comprising an alloy of platinum and cobalt, thereby providing an electrode catalyst for fuel cell whose battery output and fuel efficiency are high, and thereby providing a production process of the same.

An electrode catalyst according to the present invention for fuel cell is an electrode catalyst for fuel cell in which catalytic particles comprising platinum and cobalt are loaded on a conductive support, and is **characterized in that** a compositional (molar) ratio of said catalytic particles is platinum: cobalt = 3:1-5:1: In the range of platinum: cobalt = 3:1-5:1, a high battery voltage is obtainable. When the proportion of platinum is less than platinum: cobalt = 3:1, the elution of cobalt from out of catalyst increases. On the contrarily, when the proportion of platinum is more than platinum: cobalt = 5:1, the catalytic activities become low.

## Description

### TECHNICAL FIELD

The present invention relates to an electrode catalyst for fuel cell, especially to a catalyst that is employed for an electrode of polymer electrolyte fuel cell.

### BACKGROUND ART

Fuel cells are those which have been expected greatly to be next-generation electric-power-generation system; among them, polymer electrolyte fuel cells that use polymer solid electrolytes as their electrolytes have been regarded as hopeful as for an electric power source for electric car, because their operative temperatures are low and because they are compact, compared with the other type fuel cells such as phosphoric acid fuel cells.

A polymer electrolyte fuel cell has a laminated structure, which comprises: two electrodes, a hydrogen pole and an air pole; and a polymer solid-electrolyte membrane being held between these electrodes, and thereby electricity is taken out by means of oxidation and reduction reactions, which occur at the respective electrodes by supplying a fuel including hydrogen to the hydrogen pole and by supplying oxygen or air to the air pole. To both of these electrodes, a mixture of a catalyst for facilitating electrochemical reactions and a solid electrolyte has been applied in general. And, as for a catalyst that constitutes the electrodes, a platinum catalyst on which platinum whose catalytic activity is favorable has been widely used so far conventionally.

Recently, catalysts whose activities are higher than that of the conventional platinum catalyst have been obtained by adding other metals to platinum. In particular, the activities become the highest by alloying iron with platinum. However, during the long-time operation, iron elutes from out of the catalyst, and eluted iron ions have facilitated the deterioration of electrolyte membrane. Hence, as can been seen in Patent Literature No. 1 through Patent Literature No. 4 below, it has come to be understood that cobalt is effective as a metal whose activities are high relatively and which is less likely to deteriorate electrolyte membranes. And, in the alloys of platinum and cobalt, since the catalytic activities are lower than the catalytic activities of the alloys of platinum and iron, the output and fuel efficiency of fuel cell have become insufficient. Moreover, during an endurance test, degraded performance has been observed because of the fact that platinum particles dissolve.

Patent Literature No. 1: Japanese Patent Gazette No. 3,643,552;
PatentLiteratureNo. 2: Japanese Patent Gazette No. 3, 195, 180;
Patent Literature No. 3: Japanese Unexamined Patent Publication (KOKAI) Gazette No. 2004-47,386; and
Patent Literature No. 4: Japanese Unexamined Patent Publication (KOKAI) Gazette No. 6-246,160

### DISCLOSURE OF THE INVENTION

Assignment to be Solved by the Invention

The present invention aims at enhancing the activation of a catalyst comprising an alloy of platinum and cobalt, and at providing an electrode catalyst for fuel cell whose battery output and fuel efficiency are high, and at providing a production process of the same.

Means for Solving the Assignment and Effect

In order to achieve the aforementioned objects, the present inventors had repeated a large number of trial productions and experiments regarding catalytic particles comprising alloys of platinum and cobalt over and over again, and invented an electrode catalyst for fuel cell, electrode catalyst whose catalytic activities are high and which comprises an alloy of platinum and cobalt, and a production process of the same.

Specifically, an electrode catalyst according to the present invention for fuel cell is an electrode catalyst for fuel cell in which catalytic particles comprising platinum and cobalt are loaded on a conductive support, and is characterized in that a compositional (molar) ratio of said catalytic particles is platinum: cobalt = 3:1-5:1: In the range of platinum: cobalt = 3:1-5:1, a high battery voltage is obtainable. When the proportion of platinum is less than platinum: cobalt = 3:1, the elution of cobalt from out of catalyst increases. On the contrarily, when the proportion of platinum is more than platinum: cobalt = 5:1, the catalytic activities become low.

In the electrode catalyst according to the present invention for fuel cell, it is preferable that the particles diameters of said catalytic particles can exhibit their averaged value being 5-10 nm; and that 95% or more of the catalytic particles fall within an average particle diameter ±1 nm. In the range that the particle diameters of the catalytic particles are 5-10 nm, they make catalysts possessing high voltage characteristics. Moreover, regarding the grain-size distribution, those whose 95% of the number of particles fall within ±1 nm make highly active catalysts.

It is preferable that the electrode catalyst according to the present invention for fuel cell can be one in which, when 0.5 g of the catalyst is pulverized in a mortar and is then immersed in 30 g of 0.1 N sulfuric acid for 100 hours, an eluted concentration of cobalt into the solution is 40 ppm or less. The greater the elution of cobalt is the more Co ion-exchange with the proton conductor groups of solid electrolyte, thereby degrading initial performance. It is preferable that a water-immersion pH of catalyst in accordance with the JIS K1474 method can be 3.5-5.0.

In the electrode catalyst according to the present invention for fuel cell, as for a support of said catalyst, furnaced carbon or acetylene black whose specific surface area is 50-1,000 m²/g is preferable.

A production process according to the present invention of an electrode catalyst for fuel cell is characterized in that it includes: a dispersing step of dispersing a conductive support in a solution; a loading step of adding a platinum-salt solution and a cobalt-salt solution to the resulting dispersion liquid, thereby loading said metallic salts on the conductive support as hydroxides under an alkaline condition; an alloying step of heating the conductive support on which the resulting metallic hydroxides are loaded to reduce them in a reducing atmosphere, thereby alloying them; and a cobalt eluting step of bringing a conductive support with metallic catalyst loaded, which has been obtained at the alloying step, into contact with an acidic solution, thereby removing cobalt, which has not been alloyed, by dissolving it therein. By means of performing the cobalt eluting step, the catalytic activities improve, and it is possible to suppress the deterioration of solid electrolyte membrane.

At the dispersing step or loading step according to the present invention, it is preferable to use a protective agent for platinum. With regard to the protective agent, it is preferable to make it in such a compounding ratio as Pt: protective agent = 1:0.01-1:0.005 (molar ratio) approximately. As for the protective agent, it is possible to employ polyvinyl pyrrolidone, or polyacrylic acid. In this case, a method is preferable, method in which a platinum salt is reduced by means of a reducing agent to load. As for the reducing agent, it is possible to name alcohols, sodium tetrahydroborate, formic acid, or hydrazine, and the like.

At the loading step, not only it is possible to load platinum and cobalt simultaneously, but also it is possible to load them individually and separately.

It is preferable that the cobalt eluting step can be adapted into a step of treating the conductive support with metallic catalyst loaded with a reducing acid followed by treating it with an oxidizing acid. Moreover, the platinum-salt solution can be adapted into being at least one member the group consisting of a platinate chloride solution, a dinitrodiamine platinum nitrate solution, a hexahydroxo platinum amine solution and a platinum sulfite solution; the cobalt-salt solution can be adapted into being at least one member selected from the group consisting of a cobalt chloride solution, a cobalt nitrate solution and a cobalt sulfate solution; the reducing acid can be adapted into being at least one member selected from the group consisting of oxalic acid, formic acid and acetic acid; and the oxidizing acid can be adapted into being at least one member selected from the group consisting of nitric acid and concentrated sulfuric acid. In addition, it is preferable that the alloying step can include a step of treating it at a temperature of 700-1,000 °C for 2-6 hours in an inert atmosphere.

### BRIEF DESCRIPTION OF THE DRAWINGS

Fig. 1 is a curve-chart diagram for illustrating a relationship between cobalt compounding ratios and eluted cobalt concentrations.

Fig. 2 is a curve-chart diagram for illustrating a relationship between cobalt compounding ratios and catalytic activities.

Fig. 3 is a curve-chart diagram for illustrating a relationship between cobalt compounding ratios and battery voltages.

Fig. 4 is a curve-chart diagram for illustrating a relationship between catalysts' water-immersion pHs and battery voltages.

Fig. 5 is a curve-chart diagram for illustrating a relationship between eluted cobalt concentrations and battery voltages.

Fig. 6 is a diagram for illustrating a distribution of the particle diameters of alloys.

Fig. 7 is a diagram for comparing voltage characteristics that depended on loading methods.

Fig. 8 is a curve-chart diagram for illustrating a relationship between average particle diameters of alloys and voltage characteristics.

Fig. 9 is a diagram for comparing voltages after a 1, 000-hour, endurance test.

### BEST MODE FOR CARRYING OUT THE INVENTION

As for the conductive support that is employed in the production process according to the present invention, it is possible to employ one or more members of carbon, which is selected from the group consisting of carbon black, graphite, activated carbon and carbon nano tubes. Moreover, a fuel cell, which is manufactured employing a catalyst that is obtained by the production process according to the present invention, is not limited at all, and it is possible to employ for it those which possess structures, materials and functions that have been known so far conventionally. For example, as for the solid polymer electrolyte, it can be any of those that function as an electrolyte in polymer electrolyte fuel cell. In particular, perfluorosulfonic acid type polymers are suitable; although Nafion (produced by DuPont de Nermours Co.), Flemion (produced by ASAHI GARASU Co., Ltd.), Aciplex (produced by ASAHI KASEI KOGYO Co., Ltd.) , and the like, can be exemplified preferably, it is not limited to these. This cell for fuel cell can be adapted into those that are provided with an anode and a cathode for interposing a polymer electrolyte membrane therebetween, an anode-side conductive separator plate having a gas passage for supplying fuel gas to the anode, and additionally a cathode-side separator plate having a gas passage for supplying oxidizing-agent gas to said cathode.

### EXAMPLES

Hereinafter, examples according to the present invention, and comparative examples will be explained.

(Influence of Co Molar Ratio)

[Experimental Example No. 1]

5. 0 g of a commercially available carbon black powder whose specific surface area was about 800 m²/g was added to 0.5 L pure water, and was dispersed therein. After a platinate chloride solution including 5.0 g platinum, and cobalt chloride including 1.00 g cobalt were dissolved in 0.1 L pure water, they were dropped to the resultant dispersion liquid, and were broken in fully with the carbon. Thereafter, it was neutralized with an ammonia solution, and then was filtered. The cake being obtained by filtration was dried at 100 °C for 10 hours in vacuum. Thereafter, it was heated at 800 °C for 6 hours in a nitrogen atmosphere within an electric furnace, and was thereby subjected to an alloying treatment. Thus, an unalloyed-metal-containing catalytic powder "A" was obtained.

In order to remove unalloyed metals from this unalloyed-metal-containing catalytic powder "A," it was stirred in 1 L of 1 mol/L formic acid, was held at a liquid temperature of 90 °C for 1 hour, and was thereafter filtered. The obtained cake was stirred in 1 L of 1 mol/L nitric acid solution, was held at a liquid temperature of 60 °C for 1 hour, and was thereafter filtered. The obtained cake was dried at 100 °C for 10 hours in vacuum, thereby obtaining a catalytic powder.

The molar compositional ratio of this catalytic powder was Pt: Co = 3.1:1.0, and the carbon loading density became 47.7% by mass. In order to find the catalytic particle diameters, an XRD measurement was carried out; the average particle diameter was computed from the peak position in the (111) plane of Pt and the half-value width; as a result, it was 6.0 nm. After 0.5 g of the catalyst was pulverized fully with a mortar and then it was stirred in 20 g pure water for 1 hour, the water-immersion pH of the catalyst was measured with a pH meter (Type "F-21" produced by HORIBA) , thereby finding it to be pH 4.8. As for the eluted ratio of Co, 0.5 g of the catalyst was pulverized fully with a mortar, it was stirred in 30 g of 1N sulfuric acid for 100 hours, and it was thereafter filtered, and then a Co amount that eluted into the filtrate was measured with ICP, thereby finding the eluted concentration of Co. As a result, the eluted concentration of Co was 39 ppm.

[Experimental Example No.2]

A catalytic powder was obtained with the same processes as those of Experimental Example No. 1 except that the fed amount of cobalt was altered to 0.70 g. The molar compositional ratio of the catalytic powder was Pt:Co = 3.9:1.0, and the carbon loading density became 48.1% by mass. Moreover, the catalytic particle diameter was 5.8 nm, the water-immersion pH was 4.8, and the eluted concentration of Co was 30 ppm.

[Experimental Example No.3]

A catalytic powder was obtained with the same processes as those of Experimental Example No. 1 except that the fed amount of cobalt was altered to 0.60 g. The molar compositional ratio of the catalytic powder was Pt:Co = 5.0:1.0, and the carbon loading density became 48.5% by mass. Moreover, the catalytic particle diameter was 5.8 nm, the water-immersion pH was 4.7, and the eluted concentration of Co was 26 ppm.

[Experimental Example No.4]

A catalytic powder was obtained with the same processes as those of Experimental Example No. 1 except that the fed amount of cobalt was altered to 0.45 g. The molar compositional ratio of the catalytic powder was Pt:Co = 6.8:1.0, and the carbon loading density became 48.9% by mass. Moreover, the catalytic particle diameter was 5.8 nm, the water-immersion pH was 4.8, and the eluted concentration of Co was 24 ppm.

[Experimental Example No.5]

A catalytic powder was obtained with the same processes as those of Experimental Example No. 1 except that the fed amount of cobalt was altered to 1.30 g. The molar compositional ratio of the catalytic powder was Pt:Co = 2.4:1.0, and the carbon loading density became 47.0% by mass. Moreover, the catalytic particle diameter was 6.0 nm, the water-immersion pH was 4.7, and the eluted concentration of Co was 75 ppm.

[Voltage-characteristic Evaluation Conditions]

Using the obtained catalytic powders, single cells for polymer electrolyte fuel cell were formed in the following manner. The catalytic powders were dispersed in an organic solvent, and then the resultant dispersion liquids were coated onto a Teflon (trade name) sheet, thereby forming catalytic layers. The amount of Pt catalyst per 1 cm² electrode surface area was 0.3 mg. Electrodes, which were formed of the catalytic powders, were put together by means of thermal pressure bonding with a polymer electrolyte membrane being interposed therebetween, respectively, and then diffusion layers were installed on their opposite sides, thereby forming single cells. The "Mass Activity" that indicates catalytic activity (a current value at the time of 0.9 V) was measured while supplying humidified oxygen, which was passed through a bubbler being heated to 70 °C, to the cathode-side electrode of these single cells in an amount of 1.0 L/min.; and supplying humidified hydrogen, which was passed through a bubbler being heated to 80 °C, to the anode-side electrode thereof in an amount of 0.5 L/min. Moreover, the voltage characteristics were measured while supplying humidified oxygen, which was passed through a bubbler being heated to 50 °C, to the cathode-side electrodes in an amount of 0.6 L/min.; and supplying humidified hydrogen, which was passed through a bubbler being heated to 500 °C, to the anode-side electrodes in an amount of 0.2 L/min.

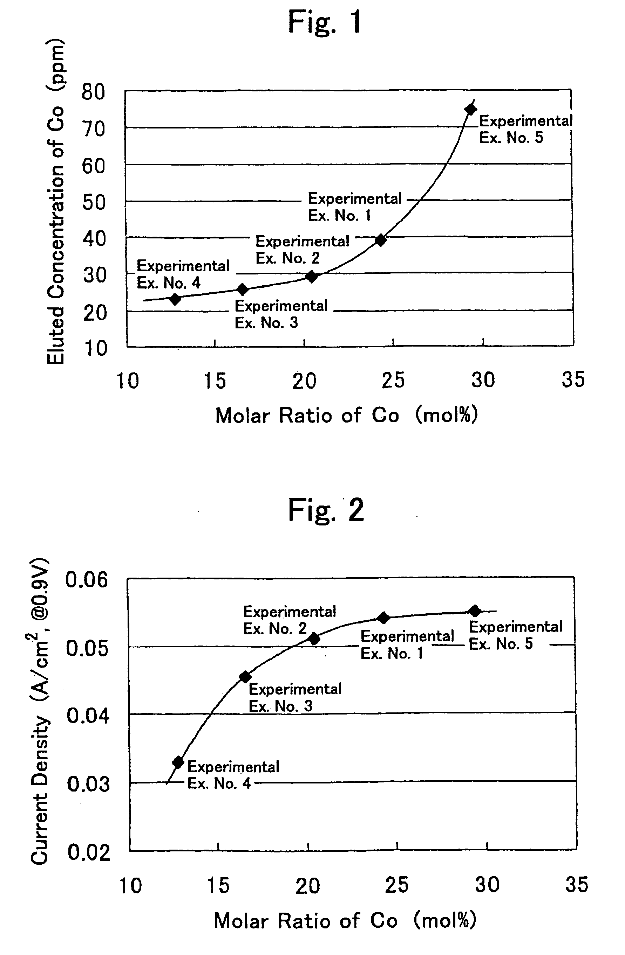

The relationships between the Co molar ratio and the eluted Co concentration, which were obtained from Experimental Example Nos. 1, 2, 3, 4 and 5, are illustrated in Fig. 1. It is believed that, as being accompanied by the change of the Co molar ratio, the concentration of Co being eluted from out of the catalysts increased, thereby hindering the proton electric conduction of the electrolyte membrane to result in the degradation of battery characteristic. Moreover, as illustrated in Fig. 2, although the current-density value at the time of 0. 9 V that indicates catalytic activity improved as the Co molar ratio became larger, it leveled off at Pt:Co = 3:1 (molar ratio).

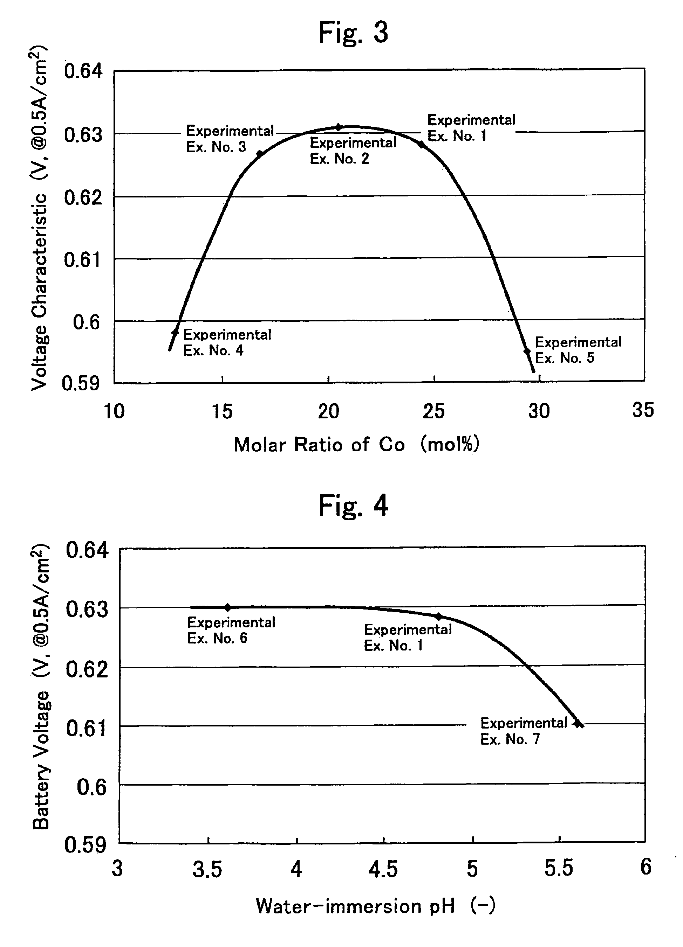

The relationships between the Co molar ratio and the voltage characteristic at 0.5 A/cm² are illustrated in Fig. 3. Regarding the voltage value, it was understood that, although substantially equivalent voltages values were exhibited while being Pt:Co= 3:1-5:1, the voltage degradations occurred when the Co molar ratio deviated from this range.

The causes of this are believed to be the degradation of the proton conduction, degradation which results from the increment of the eluted Co concentration, when the Co molar ratio increases; and to be the degradation of catalytic activities when the Co molar ratio decreases.

(Influence of Water-immersion pH)

[Experimental Example No. 6]

Unalloyed-metal-containing catalytic powder "A" that was obtained by performing the procedures up to the alloying process in the same manner as Experimental Example No. 1 was stirred in 1 L of 1 mol/L formic acid solution, was then held at a liquid temperature of 90 °C for 1 hour, and was thereafter filtered. The obtained cake was stirred in 1 L of 2 mol/L nitric acid solution, was then held at a liquid temperature of 80 °C for 1 hour, and was thereafter filtered. The obtained cake was dried at 100 °C for 10 hours in vacuum, thereby obtaining a catalytic powder.

The molar compositional ratio of the catalytic powder was Pt:Co = 3.3:1.0, and the carbon loading density became 47.8% by mass. Moreover, the catalytic particle diameter was 5.9 nm, the water-immersion pH was 3.6, and the eluted concentration of Co was 35 ppm.

[Experimental Example No. 7]

Unalloyed-metal-containing catalytic powder "A" that was obtained by performing the procedures up to the alloying process in the same manner as Experimental Example No. 1 was stirred in 1 L of 1 mol/L formic acid solution, was then held at a liquid temperature of 90 °C for 1 hour, and was thereafter filtered. The obtained cake was stirred in 1 L of 0.5 mol/L nitric acid solution, was then held at a liquid temperature of 40 °C for 1 hour, and was thereafter filtered. The obtained cake was dried at 100 °C for 10 hours in vacuum, thereby obtaining a catalytic powder. The molar compositional ratio of the catalytic powder was Pt:Co = 3.0:1.0, and the carbon loading density became 47.6% by mass. Moreover, the catalytic particle diameter was 5.9 nm, the water-immersion pH was 5.6, and the eluted concentration of Co was 46 ppm.

[Experimental Example No. 8]

Unalloyed-metal-containing catalytic powder "A" that was obtained by performing the procedures up to the alloying process in the same manner as Experimental Example No. 1 was stirred in 1 L of 1 mol/L formic acid solution, was then held at a liquid temperature of 90 °C for 1 hour, and was thereafter filtered. The obtained cake was stirred in 1 L of 5 mol/L nitric acid solution, was then held at a liquid temperature of 80 °C for 1 hour, and was thereafter filtered. The obtained cake was dried at 100 °C for 10 hours in vacuum, thereby obtaining a catalytic powder.

The molar compositional ratio of the catalytic powder was Pt:Co = 3.5:1.0, and the carbon lading density became 47.9% by mass. Moreover, the catalytic particle diameter was 5.9 nm, the water-immersion pH was 3.0, and the eluted concentration of Co was 30 ppm.

The relationship between the water-immersion pH and the voltage characteristic at the time of 0.5 A/cm², relationship which was obtained from Experimental Example Nos. 1, 6 and 7, is illustrated in Fig. 4. The improvement of the voltage was confirmed starting at around a water-immersion pH of 5.0. However, though not being shown diagrammatically in Fig. 4, it was observed that, in the catalytic powder according to Experimental Example No. 8 whose water-immersion pH was 3.0, the catalytic layer with lower water-immersion pH partially was not pressure bonded thermally when forming the single cell, and thereby parts that remained on the Teflon (trade name) sheet arouse therefrom.

It is optimum that the water-immersion pH of the catalytic powder can be pH 3.5-5.0.

(Influence of Concentration of Co being Eluted from out of Catalytic Powder)

[Experimental Example No. 9]

Unalloyed-metal-containing catalytic powder "A" that was obtained by performing the procedures up to the alloying process in the same manner as Experimental Example No. 4 was stirred in 1 L of 2 mol/L nitric acid solution, was then held at a liquid temperature of 80 °C for 1 hour, and was thereafter filtered. The obtained cake was dried at 100 °C for 10 hours in vacuum, thereby obtaining a catalytic powder.

The molar compositional ratio of the catalytic powder was Pt:Co = 3.0:1.0, and the carbon loading density became 47.8% by mass. Moreover, the catalytic particle diameter was 5.9 nm, the water-immersion pH. was 3.7, and the eluted concentration of Co was 45 ppm.

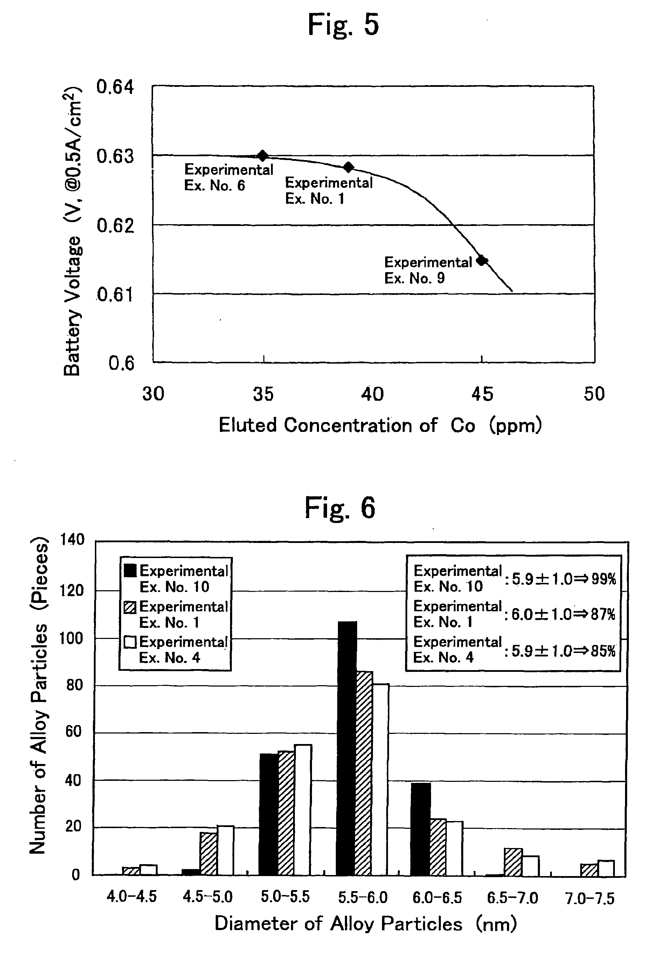

The relationship between the eluted concentration of Co and the voltage characteristic at the time of 0.5 A/cm², relationship which was obtained from Experimental Example Nos. 1, 6 and 9, is illustrated in Fig. 5. Although the performance degradation was hardly seen when the eluted concentration of Co was 40 ppm or less, a voltage drop was seen when it was 40 ppm or more. Although the lower the eluted concentration of Co from out of the catalysts the higher the voltage characteristic becomes, it is important to make it 40 ppm or less because the drop width is small up to 40 ppm approximately.

(Influence of Uniformizing Alloy Particle Diameters)

[Experimental Example No. 10]

5. 0 g of a commercially available carbon black powder whose specific surface area was about 800 m²/g was added to 0.5 L pure water, and was dispersed therein. 2.5 g polyacrylic acid was poured in the resultant dispersion liquid; and then, after a platinate chloride solution including 5.0 g platinum, and cobalt chloride including 1.00 g cobalt were dissolved in 0.1 L pure water, they were dropped thereto, and were broken in fully with the carbon. Thereafter, the dispersion liquid was warmed to 80 °C, and then a hydrazine solution including 8.2 g hydrazine was dropped thereto. After finishing the drop, it was stand to cool, the cake being obtained by filtration was dried at 100 °C for 10 hours in vacuum. The subsequent processes were carried out in the same manner as those in Experimental Example No. 1, thereby obtaining a catalytic powder.

The molar compositional ratio of the catalytic powder was Pt:Co = 3.3:1.0, and the carbon loading density became 47.8% by mass. Moreover, the catalytic particle diameter was 5.9 nm, the water-immersion pH was 4.7, and the eluted concentration of Co was 26 ppm.

In order to measure an alloy particle-diameter distribution of the catalyst, particles diameters of 200 grains of the alloy particles were measured by magnifying the field of view by 800, 000 times with a transmission electron microscope (TEM). In Table 1, comparisons of physical properties between the catalysts of Experimental Example No. 10 and Experimental Example No. 1 are given.

**[TABLE 1]**

| | Pt:Co | Carbon (% by mass) | Alloy Particle Diameter (nm) | Water-immersion pH (-) | Eluted Concentration of Co |
|---|---|---|---|---|---|
| Experimental Example No. 10 | 3.3:1 | 47.8 | 5.9 | 4.7 | 26 |
| Experimental Example No. 1 | 3.1:1 | 47.7 | 6.0 | 4.8 | 39 |

[Experimental Example No. 11]

Except that the alloying process was performed at 1,000 °C for 6 hours, a catalyst preparation was performed in the same manner as Experimental Example No. 10, thereby obtaining a catalytic powder. The molar compositional ratio of the catalytic powder was Pt:Co = 3.2:1.0, and the carbon loading density became 47.8% by mass. Moreover, the catalytic particle diameter was 9.5 nm, the water-immersion pH was 4.7, and the eluted concentration of Co was 22 ppm.

[Experimental Example No. 12]

Except that the alloying process was performed at 600 °C for 6 hours, a catalyst preparation was performed in the same manner as Experimental Example No. 10, thereby obtaining a catalytic powder. The molar compositional ratio of the catalytic powder was Pt:Co = 3.6:1.0, and the carbon loading density became 48.0% by mass. Moreover, the catalytic particle diameter was 3.6 nm, the water-immersion pH was 4.7, and the eluted concentration of Co was 49 ppm.

[Experimental Example No. 13]

Except that the alloying process was performed at 1, 100 °C for 6 hours, a catalyst preparation was performed in the same manner as Experimental Example No. 10, thereby obtaining a catalytic powder. The molar compositional ratio of the catalytic powder was Pt:Co = 3.0:1.0, and the carbon loading density became 47.6% by mass. Moreover, the catalytic particle diameter was 12.3 nm, the water-immersion pH was 4.8, and the eluted concentration of Co was 16 ppm.

[Experimental Example No. 14]

Except that the alloying process was performed at 700 °C for 6 hours, a catalyst preparation was performed in the same manner as Experimental Example No. 10, thereby obtaining a catalytic powder. The molar compositional ratio of the catalytic powder was Pt:Co = 3.4:1.0, and the carbon loading density became 47.9% by mass. Moreover, the catalytic particle diameter was 5.1 nm, the water-immersion pH was 4.7, and the eluted concentration of Co was 35 ppm.

The physical properties of the catalyst that were obtained from Experimental Example No. 10 and Experimental Example No. 1 are given in Table 1. In Experimental Example No. 10, the eluted concentration of Co was small compared with that in Experimental Example No. 1. As for the cause of this, the following are assumed to be a cause, that is, the alloy particle diameters became more uniform in Experimental Example No. 10 than those in the other so that the elution of Co from out of the minute particles was suppressed (Fig. 6, and TEM measurement results). Fig. 6 is a diagram that illustrates the alloy particle-diameter distributions of Experimental Example No. 1, Experimental Example No. 4 and Experimental Example No. 10.

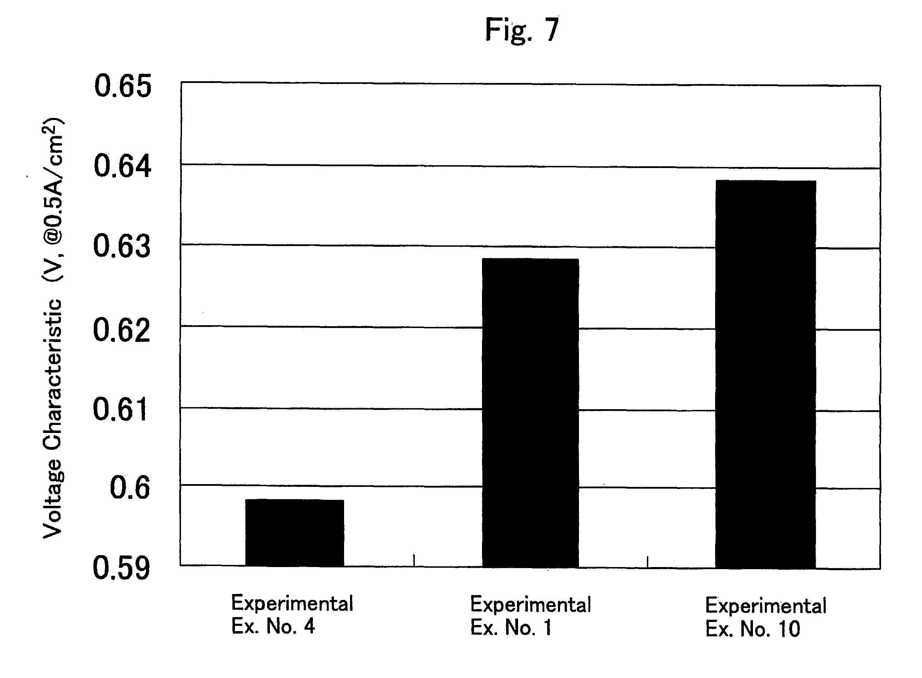

A comparison between voltage characteristics of Experimental Example No. 10, Experimental Example No. 1 and Experimental Example No. 4 is illustrated in Fig. 7. In Experimental Example No. 10, a voltage improvement by about 40 mV was seen in comparison with that in Experimental Example No. 4, and a voltage improvement by about 10 mV was seen even in comparison with that in Experimental Example No. 1. It is believed that the decline in the eluted concentration of Co could be the factor that improved the voltage more than that of Experimental Example No. 1.

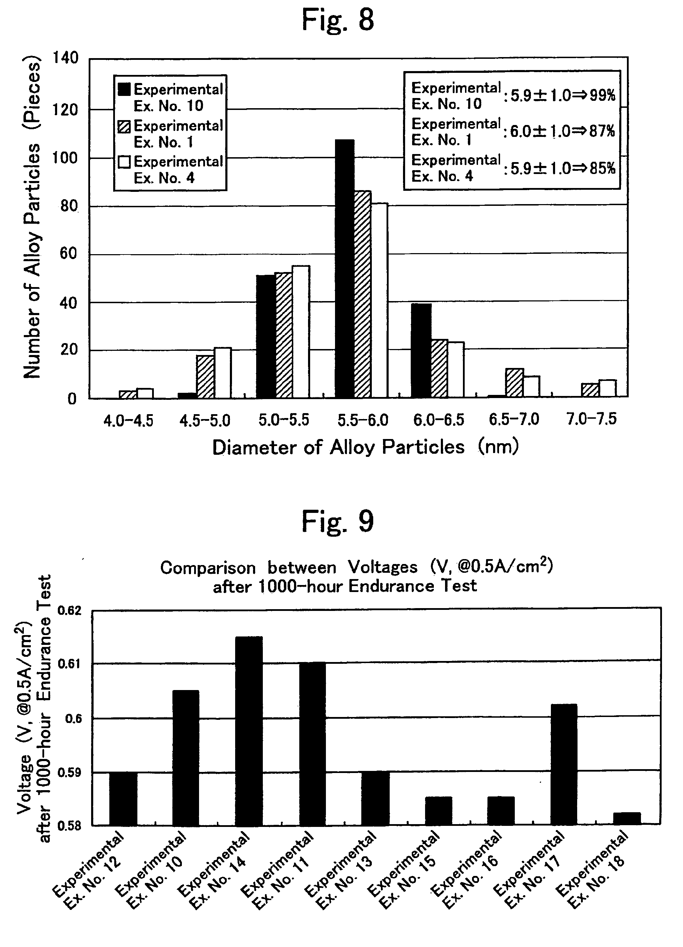

In Fig. 8, relationships between the alloy particles' average particle diameters and the voltage characteristics are illustrated, relationships which were obtained from Experimental Example No. 10, Experimental Example No. 11, Experimental Example No. 12, Experimental Example No. 13, Experimental Example No. 14 and Experimental Example No. 17.

The battery voltages are high at around average particle diameters of 5.0-10.0 nm, and thereby this range is believed to be favorable. It is believed that the fact that the eluted concentration of Co increased sharply when being an average particle diameter of 5 nm or less; and moreover the voltage decline that resulted from the reaction-surface-area decline when being an average particle diameter of 10 nm or more could be the factors of this.

It is important that an average particle diameter of the alloy particles can be 5.0-10.0 nm; and that how the particle diameters fluctuate, that is, 95% of them can be present within an average particle diameter ±1 nm.

(Influence of High-temperature Heat Treatment in Inert Gas Atmosphere)

[Experimental Example No. 15]

A catalytic powder was obtained by performing a catalyst preparation in the same manner as Experimental Example No. 14 except that the alloying atmosphere was altered to hydrogen gas. The molar compositional ratio of the catalytic powder was Pt:Co = 2.7:1.0, and the carbon loading density became 47.4% by mass. Moreover, the catalytic particle diameter was 21.8 nm, the water-immersion pH was 4.9, and the eluted concentration of Co was 8 ppm.

[Experimental Example No. 16]

A catalytic powder was obtained by performing a catalyst preparation in the same manner as Experimental Example No. 14 except that the alloying time was altered to 1 hour. The molar compositional ratio of the catalytic powder was Pt:Co = 3.6:1.0, and the carbon loading density became 48.0% by mass. Moreover, the catalytic particle diameter was 4.4 nm, the water-immersion pH was 4.7, and the eluted concentration of Co was 41 ppm.

[Experimental Example No. 17]

A catalytic powder was obtained by performing a catalyst preparation in the same manner as Experimental Example No. 14 except that the alloying time was altered to 2 hours. The molar compositional ratio of the catalytic powder was Pt:Co = 3.4:1.0, and the carbon loading density became 47.9% by mass. Moreover, the catalytic particle diameter was 5.0 nm, the water-immersion pH was 4.7, and the eluted concentration of Co was 29 ppm.

[Experimental Example No. 18]

A catalytic powder was obtained by performing a catalyst preparation in the same manner as Experimental Example No. 14 except that the alloying time was altered to 7 hours. The molar compositional ratio of the catalytic powder was Pt:Co = 3.4:1.0, and the carbon loading density became 47.9% by mass. Moreover, the catalytic particle diameter was 5.1 nm, the water-immersion pH was 4.7, and the eluted concentration of Co was 36 ppm.

The alloying conditions for aforementioned Experimental Example Nos. 10-18 are set forth in Table 2.

**[TABLE 2]**

| | Alloying Conditions | | |
|---|---|---|---|
| | Temperature | Time | Gas |
| Experimental Ex. No. 12 | 600 | 6 | N₂ |
| Experimental Ex. No. 10 | 800 | 6 | N₂ |
| Experimental Ex. No. 14 | 700 | 6 | N₂ |
| Experimental Ex. No. 11 | 1000 | 6 | N₂ |
| Experimental Ex. No. 13 | 1100 | 6 | N₂ |
| Experimental Ex. No. 15 | 800 | 6 | H₂ |
| Experimental Ex. No. 16 | 700 | 1 | N₂ |
| Experimental Ex. No. 17 | 700 | 2 | N₂ |
| Experimental Ex. No. 18 | 700 | 7 | N₂ |

[Voltage Endurance Test]

Using the catalysts according to Experimental Example Nos. 14, 15, 16, 17 and 18, the initial voltages of single cells that were prepared in the same manner as those for the voltage characteristic evaluation, and thereafter a durability test were performed under conditions being specified below.

Said single cells were heated to a temperature of 80 °C, and then the current value was fluctuated between OCV and 0.1 A/cm² for every 5 seconds for a total time period of 1,000 hours while supplying humidified air, which was passed through a bubbler being heated to 60 °C, to the cathode-side electrodes in a stoichiometric ratio of 3.5; and supplying humidified hydrogen, which was passed through a bubbler being heated to 60 °C, to the anode-side electrodes in a stoichiometric ratio of 3.

Their durabilities were compared by measuring the voltage characteristics after the 1,000-hour endurance test, that is, by comparing their voltage values at 0.5 A/cm² current density. The results are summarized in Fig. 9.

As can be seen from Fig. 9, it is understood that, when the alloying temperature was 700-1,000 °C; when the alloying time was 2-6 hours; and when an inert gas, such as nitrogen, was employed for the gaseous atmosphere, they had high durabilities.

### INDUSTRIAL APPLICABILITY

The electrode catalyst of the invention according to the present application for fuel cell is made by loading an alloy of platinum and cobalt on a catalytic support. This catalyst minimizes the deterioration against solid electrolyte, and additionally demonstrates high catalytic activities. Employing this catalyst makes it possible to make fuel cells high-performance, and makes the downsizing of apparatus possible, downsizing which results from making them high-performance, thereby contributing to popularizing fuel cells.

## Claims

1. An electrode catalyst for fuel cell, the electrode catalyst being an electrode catalyst for fuel cell in which catalytic particles comprising platinum and cobalt are loaded on a conductive support, and the electrode catalyst being characteri zed in that a compositional (molar) ratio of said catalytic particles is platinum: cobalt = 3:1-5:1.

2. The electrode catalyst for fuel cell set forth in claim 1, wherein: the particles diameters of said catalytic particles exhibit their averaged value being 5-10 nm; and 95% or more of the catalytic particles fall within an average particle diameter ±1 nm.

3. The electrode catalyst for fuel cell set forth in claim 1 or 2, wherein, when 0.5 g of said electrode catalyst for fuel cell is pulverized in a mortar and is then immersed in 30 g of 0.1 N sulfuric acid for 100 hours, an eluted concentration of cobalt into the solution is 40 ppm or less.

4. The electrode catalyst for fuel cell set forth in claims 1-3, wherein a water-immersion pH of catalyst in accordance with the JIS K1474 method is 3.5-5.0.

5. The electrode catalyst for fuel cell set forth in claims 1-4, wherein said conductive support can preferably be furnaced carbon or acetylene black whose specific surface area is 50-1,000 m²/g.

6. A production process of an electrode catalyst for fuel cell, the production process being **characterized in that** it includes:
a dispersing step of dispersing a conductive support in a solution;
a loading step of adding a platinum-salt solution and a cobalt-salt solution to the resulting dispersion liquid, thereby loading said metallic salts on the conductive support as hydroxides under an alkaline condition;
an alloying step of heating the conductive support on which the resulting metallic hydroxides are loaded to reduce them in a reducing atmosphere, thereby alloying them; and
a cobalt eluting step of bringing a conductive support with metallic catalyst loaded, which has been obtained at the alloying step, into contact with an acidic solution, thereby removing cobalt, which has not been alloyed, by dissolving it therein.

7. The production process of an electrode catalyst for fuel cell set forth in claim 6, wherein said cobalt eluting step is a step of treating said conductive support with metallic catalyst loaded with a reducing acid followed by treating it with an oxidizing acid.

8. The production process of an electrode catalyst for fuel cell, wherein, at said dispersing step or loading step, a protective agent is added thereto, thereby equalizing the particles diameters of catalyst.

9. The production process of an electrode catalyst set forth in claim 7, wherein:
said platinum-salt solution is at least one member selected from the group consisting of a platinate chloride solution, a dinitrodiamine platinum nitrate solution, a hexahydroxo platinum amine solution and a platinum sulfite solution;
said cobalt-salt solution is at least one member selected from the group consisting of a cobalt chloride solution, a cobalt nitrate solution and a cobalt sulfate solution;
said reducing acid is at least one member selected from the group consisting of oxalic acid, formic acid and acetic acid; and
said oxidizing acid is at least one member selected from the group consisting of nitric acid and concentrated sulfuric acid.

10. The production process of an electrode catalyst for fuel cell set forth in claim 6, wherein said alloying step includes a step of treating it at a temperature of 700-1,000 °C for 2-6 hours in an inert atmosphere.
